(19) Europäisches Patentamt
European Patent Office
Office européen des brevets

(11) EP 2 662 405 B1

(12) **EUROPEAN PATENT SPECIFICATION**

(45) Date of publication and mention of the grant of the patent:
**17.12.2014 Bulletin 2014/51**

(51) Int Cl.:
***C08K 7/02*** *(2006.01)*

(21) Application number: **13167022.6**

(22) Date of filing: **08.05.2013**

(54) **Rubber composition and pneumatic tire**

Kautschukzusammensetzung und Luftreifen

Composition de caoutchouc et pneu

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2012 JP 2012107972**
**24.01.2013 JP 2013011398**

(43) Date of publication of application:
**13.11.2013 Bulletin 2013/46**

(73) Proprietor: **Sumitomo Rubber Industries, Ltd.**
**Kobe-shi,**
**Hyogo 651 (JP)**

(72) Inventor: **Miyazaki, Tatsuya**
**Kobe-shi,, Hyogo 651-0072, (JP)**

(74) Representative: **TBK**
**Bavariaring 4-6**
**80336 München (DE)**

(56) References cited:
**EP-A1- 2 072 574 EP-A2- 2 615 127**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a rubber composition and a pneumatic tire formed from the rubber composition.

### BACKGROUND ART

Rubber compositions can be reinforced and improved in modulus (complex modulus) by adding microfibrillated plant fibers (e.g. cellulose fibers) as filler. However, microfibrillated plant fibers have low dispersibility during the kneading of the rubber compound because of their strong self-aggregation properties and poor compatibility with the rubber component. Therefore, the tensile properties and fuel economy are deteriorated in some cases when microfibrillated plant fibers are added. Thus, a method for enhancing the dispersibility of microfibrillated plant fibers is desired.

Patent Literature 1 discloses a method for improving the compatibility between the rubber component and microfibrillated plant fibers by a chemical modification of the microfibrillated plant fibers. However, there is still a scope of improvement in this method because these microfibrillated plant fibers are inferior to conventional fillers such as carbon black in terms of reinforcement and cost.

Meanwhile, if the weight of tires is saved by thinning the sidewalls or downsizing the bead part in order to improve the fuel economy of vehicles, the rigidity of the tires tends to be reduced, which causes low handling stability. Therefore, securing the handling stability is needed by enhancing the modulus of sidewalls, clinch apexes, or internal components of tires (e.g. inner sidewall layers, strip apexes, bead apexes, tie gums, base treads).

Known methods for enhancing the modulus of rubber compositions include a method of increasing the sulfur content, and a method of adding a butadiene rubber that contains syndiotactic crystals. However, these methods may lead to reduced elongation at break and thereby fail to secure sufficient durability. Rubber compositions for tires are also required to give excellent ride comfort. The increase in the modulus of rubber compositions, however, tends to reduce the ride comfort. Thus, since the handling stability has a trade-off relationship with the elongation at break and ride comfort, the conventional methods have had difficulty in improving all these properties in a balanced manner.

### CITATION LIST

### PATENT LITERATURE

Patent Literature 1: JP 4581116 B

### SUMMARY INVENTION INVENTION

### TECHNICAL PROBLEM

The present invention aims to provide a rubber composition which can solve the above problems, and makes it possible to improve the handling stability, ride comfort, and elongation at break in a balanced manner, and at the same time to achieve satisfactory processability and fuel economy; and also provide a pneumatic tire formed from the rubber composition.

### SOLUTION TO PROBLEM

The present invention relates to a rubber composition, including a masterbatch that includes: a modified natural rubber with a phosphorus content of 200 ppm or less; and microfibrillated plant fibers.

Preferably, the rubber composition has a ratio ($E^*a/E^*b$) of a complex modulus $E^*a$ in an extrusion direction to a complex modulus $E^*b$ in a perpendicular direction to the extrusion direction, both measured at a temperature of 70°C and a dynamic strain amplitude of 2% under an initial elongation of 10%, of 1.05 to 6 .00, wherein the complex modulus $E^*a$ is 7 to 100 MPa.

The masterbatch preferably includes 5 to 30 parts by mass of the microfibrillated plant fibers relative to 100 parts by mass of the modified natural rubber.

Preferably, the rubber composition includes at least one of a carbon black with a nitrogen adsorption specific surface area of 25 to 200 $m^2/g$ and a silica with a nitrogen adsorption specific surface area of 70 to 300 $m^2/g$, and the rubber composition has a total content of the carbon black and the silica of 25 to 80 parts by mass per 100 parts by mass of the total rubber component.

Preferably, the rubber composition includes at least one cross-linkable resin selected from the group consisting

of resorcinol resins, modified resorcinol resins, cresol resins, modified cresol resins, phenolic resins, and modified phenolic resins, and the rubber composition has a total content of the cross-linkable resins of 1 to 20 parts by mass per 100 parts by mass of the total rubber component. This is because such a rubber composition can have both high complex modulus E*a and high complex modulus E*b as well as low tan $\delta$.

Preferably, the rubber composition includes an alkylphenol-sulfur chloride condensate represented by the following formula (1):

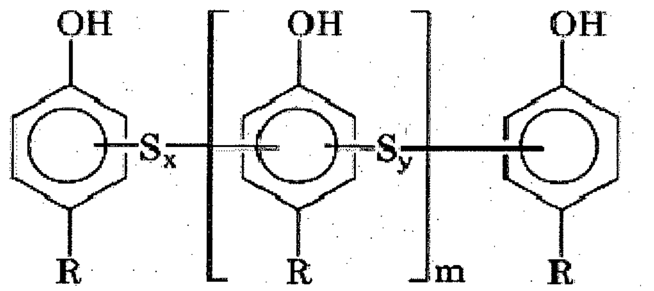

(1)

wherein Rs are the same as or different from one another and each represent an C5 to C15 alkyl group or an amyl group; x and y are the same as or different from each other and each represent an integer of 1 to 4; and m represents an integer of 0 to 300, and

the rubber composition has a content of the alkylphenol-sulfur chloride condensate of 0.2 to 10 parts by mass per 100 parts by mass of the total rubber component.

The rubber composition is preferably for use in a tire component.

The tire component is preferably a sidewall, a base tread, a tie gum, a bead apex, a strip apex, a clinch apex, or a wing.

The present invention also relates to a pneumatic tire, formed from the rubber composition.

ADVANTAGEOUS EFFECTS OF INVENTION

The present invention provides a rubber composition including a masterbatch that includes a modified natural rubber with a phosphorus content of 200 ppm or less and microfibrillated plant fibers. Therefore, the use of the rubber composition for a tire component such as a sidewall leads to a pneumatic tire which has improved in handling stability, ride comfort, and elongation at break in a balanced manner, and also has satisfactory fuel economy. Also in the present invention, the agglomerates of microfibrillated plant fibers can be reduced, which enables improved processability. Furthermore, the thickness of sidewalls and bead parts can be reduced while the handling stability is satisfactorily maintained, and therefore the fuel economy of vehicles can be improved.

BRIEF DESCRIPTION OF DRAWINGS

Fig. 1 shows a schematic cross-sectional view of test tires of examples and comparative examples.

DESCRIPTION OF EMBODIMENTS

The rubber composition of the present invention is prepared from a masterbatch that includes a modified natural rubber with a phosphorus content of 200 ppm or less and microfibrillated plant fibers. Conventionally, although it is possible to disperse microfibrillated plant fibers in a masterbatch, uniform dispersion of microfibrillated plant fibers in a rubber composition is unfortunately difficult to obtain when the masterbatch is added into the rubber composition. This problem can be solved by the rubber composition of the present invention, which includes a modified natural rubber with a phosphorus content of 200 ppm or less. The modified natural rubber is characterized by being able to incorporate filler easily and having high compatibility with other polymers because the honeycomb cells formed from proteins and phospholipids, which are unique to natural rubber, have been removed from the modified natural rubber. Thus, a rubber composition in which microfibrillated plant fibers are uniformly dispersed can be prepared by kneading a masterbatch that includes the microfibrillated plant fibers and the modified natural rubber, with other rubber chemicals and the like. Therefore, it is possible to ensure handling stability, elongation at break, and ride comfort simultaneously, which has been difficult to accomplish by conventional techniques. In addition, satisfactory processability and fuel economy can also be secured.

The modified natural rubber (HPNR: Highly Purified Natural Rubber) has a phosphorus content of 200 ppm or

less. If the phosphorus content exceeds 200 ppm, the gel content increases during storage. This causes a raised tan δ in the vulcanized rubber compound, leading to poor fuel economy; and also causes a raised Mooney viscosity in the unvulcanized rubber compound, leading to poor processability. The phosphorus content is 200 ppm or less, preferably 120 ppm or less. The phosphorus content can be determined by any conventional method such as ICP optical emission spectrometry. The phosphorus derives from phospholipids (phosphorus compounds).

The modified natural rubber preferably has a nitrogen content of 0.3 mass% or less, and more preferably 0.15 mass% or less. A modified natural rubber with a nitrogen content of more than 0.3 mass% tends to show an increase in Mooney viscosity during storage, thereby leading to poor processability. It may also deteriorate the fuel economy. The nitrogen content can be determined by any conventional method such as Kjeldahl method. The nitrogen derives from proteins.

The modified natural rubber preferably has a gel content of not more than 20 mass%, more preferably not more than 10 mass%, and further preferably not more than 7 mass%. If the gel content exceeds 20 mass%, the Mooney viscosity tends to rise, whereby the processability tends to be poor. In addition, the fuel economy may also become poor. The gel content means the amount of insolubles in toluene which is a nonpolar solvent, and hereinafter, the gel content may be referred to simply as "gel content" or "gel fraction". The method for determining the gel content is as follows. A natural rubber sample is immersed in dehydrated toluene and left at a dark place shielded from light for one week. The resulting toluene solution is centrifuged at $1.3\times10^5$ rpm for 30 minutes, whereby an insoluble gel fraction is separated from a toluene-soluble fraction. The insoluble gel fraction is solidified by adding methanol, and the solid gel is dried. Then, the gel content can be determined as the ratio of the mass of the obtained gel fraction to the original mass of the sample.

The modified natural rubber preferably contains substantially no phospholipids. The phrase "contains substantially no phospholipids" means that no phospholipid peak is present in a range of -3 to 1 ppm in a $^{31}P$ NMR measurement of an extract obtained by chloroform extraction from a natural rubber sample. The phospholipid peak present in a range of -3 to 1 ppm refers to a peak ascribed to the phosphate structure of the "phospho" of phospholipids.

Examples of the microfibrillated plant fibers (cellulose nanofibers) include those derived from natural products such as wood, bamboo, hemp, jute, kenaf, crop wastes, cloths, recycled pulp, wastepaper, bacterial cellulose, and ascidian cellulose. The method for preparing the microfibrillated plant fibers is not particularly limited, and for example, a method may be mentioned in which any of the above natural products is chemically treated with a chemical such as sodium hydroxide and then mechanically ground or beaten by a machine such as a refiner, a twin-screw kneader (twin-screw extruder), a twin-screw kneading extruder, a high-pressure homogenizer, a media agitating mill, a stone mill, a grinder, a vibrating mill, or a sand grinder.

The content of the microfibrillated plant fibers in the masterbatch is preferably 5 parts by mass or more, and more preferably 10 parts by mass or more, per 100 parts by mass of the modified natural rubber. If the content thereof is less than 5 parts by mass, too much the modified natural rubber may be present in a rubber composition containing the masterbatch in order to get a desired amount of microfibrillated plant fibers in the rubber composition. In this case, the crosslink density may be reduced and the fuel economy may be poor. The content of the microfibrillated plant fibers is preferably 30 parts by mass or less, and more preferably 26 parts by mass or less. If the content thereof exceeds 30 parts by mass, the masterbatch may become too hard compared with other rubber materials such as TSR, BR, and SBR, and therefore the masterbatch may not be easily mixed with the other rubber materials. In turn, the dispersibility of microfibrillated plant fibers may be reduced, which may lead to poor elongation at break and poor fuel economy.

The masterbatch can be prepared, for example, by a method including: a step (I) of coagulating a mixture of a saponified natural rubber latex and microfibrillated plant fibers; and a step (II) of washing the coagulated matter obtained in the step (I) to adjust the phosphorus content in rubber to 200 ppm or less. More specifically, a composite containing a modified natural rubber (HPNR) with a phosphorus content of 200 ppm or less can be prepared as follows: first, a natural rubber latex subjected to saponification treatment with an alkali such as NaOH (saponified natural rubber latex) is prepared; microfibrillated plant fibers are introduced into the saponified natural rubber latex, and the mixture is stirred to prepare a compounded latex (liquid mixture); the compounded latex is coagulated and then the liquid phase is discarded; and the obtained coagulated matter is washed so that the phosphorus content in natural rubber is reduced. Thus, a composite containing microfibrillated plant fibers uniformly dispersed in HPNR can be prepared. In this method, the microfibrillated plant fibers are introduced after the saponification treatment. Hence, the alkalinity is weakened so that the damage on the microfibrillated plant fibers can be suppressed. It should be noted that after the microfibrillated plant fibers are introduced, the next operations, that is, stirring and coagulating, are preferably started in a short time.

(Step (I))

Natural rubber latex is collected as sap of natural rubber trees such as Hevea trees, and it contains water, proteins, lipids, inorganic salts, and the like, in addition to a rubber fraction. A gel fraction in rubber is thought to be attributed to a complex of various impurities in rubber. In the present invention, usable natural rubber latexes include

raw latex (field latex) taken from Hevea trees by tapping the trees, and concentrated latex obtained by centrifugation or creaming (e.g., purified latex, high-ammonia latex containing ammonia mixed by a usual method, LATZ latex stabilized with zinc oxide, TMTD, and ammonia).

Natural rubber latex can be saponified by mixing the natural rubber latex with an alkali such as NaOH and optionally a surfactant, and allowing the mixture to stand still at a predetermined temperature for a certain period. Operations such as stirring may be performed, if necessary. As natural rubber in a latex state is saponified as mentioned above, the particles of natural rubber are uniformly treated, which contributes to efficient saponification. After the saponification treatment, phosphorus compounds separated in the saponification treatment are washed off in the below-described step (II). Thus, the phosphorus content in the natural rubber contained in a masterbatch to be prepared is reduced. Furthermore, the saponification treatment causes decomposition of the proteins in natural rubber. Thus, the nitrogen content in the natural rubber is also reduced.

The alkali used in the saponification treatment is preferably sodium hydroxide, potassium hydroxide, or the like. The surfactant is not particularly limited, and examples thereof include known nonionic, anionic, and amphoteric surfactants such as polyoxyethylene alkyl ether sulfate salts. Polyoxyethylene alkyl ether sulfate salts are suitable from the viewpoint of satisfactory saponification of rubber without coagulation. In the saponification treatment, the amounts of the alkali and surfactant, and the temperature and time of the saponification treatment can be set as appropriate.

In the step (I), the microfibrillated plant fibers may be introduced, into the saponified natural rubber latex, as an aqueous solution in which the microfibrillated plant fibers are dispersed in water (aqueous solution of microfibrillated plant fibers), or they may be introduced as it is into the saponified natural rubber latex and then the mixture is optionally diluted with water. It is preferable to introduce the aqueous solution of microfibrillated plant fibers into the saponified natural rubber latex, from the viewpoint of good dispersion of the microfibrillated plant fibers. In the aqueous solution of microfibrillated plant fibers, the content of the microfibrillated plant fibers (solids content) is preferably 0.2 to 20 mass%, more preferably 0.5 to 10 mass%, and further preferably 0.5 to 3 mass%.

The degree of disintegration (degree of cutting) of the microfibrillated plant fibers can be determined from the viscosity of the aqueous solution of microfibrillated plant fibers. In other words, the higher the viscosity is, the more the fibers are disintegrated (which means that the fibers are cut into shorter lengths). The viscosity of the aqueous solution of microfibrillated plant fibers is preferably 2.0 mPa·s or more, more preferably 2.5 mPa·s or more, and further preferably 5.0 mPa·s or more. If the viscosity is below 2.0 mPa·s, the fibers may not be sufficiently disintegrated and sufficient reinforcement may not be obtained. In addition, the agglomerates of fibers may form fracture nuclei and therefore the elongation at break may be reduced. The viscosity of the aqueous solution of microfibrillated plant fibers is preferably 10.0 mPa·s or less, more preferably 9.0 mPa·s or less, and further preferably 8.0 mPa·s or less. If the viscosity exceeds 10.0 mPa·s, the aqueous solution may not be easily stirred and therefore the fibers around a stirring rotor may be locally beaten, which may make it difficult to beat the fibers uniformly. In addition, the microfibrillated plant fibers may not be easily mixed with the saponified natural rubber latex.

Here, the viscosity of the aqueous solution of microfibrillated plant fibers refers to a value obtained by measuring the aqueous solution of microfibrillated plant fibers, which contains 0.5 mass% of microfibrillated plant fibers and 99.5 mass% of water, with a tuning-fork vibration viscometer at ordinary temperature (23°C).

The degree of disintegration of the microfibrillated plant fibers can be adjusted by the stirring speed, stirring time, and the like of the aqueous solution of microfibrillated plant fibers. The fibers are more disintegrated by a faster stirring speed and a longer stirring time. Moreover, the fibers can be efficiently disintegrated by appropriate selection of the type of homogenizer to be used for stirring, the shape of rotary teeth, and the shear performance.

A mixture of the saponified natural rubber latex and the microfibrillated plant fibers can be prepared, for example, by adding dropwise or injecting these components sequentially, and then mixing them by a known method.

Examples of the method for coagulating the mixture include acid coagulation, salt coagulation, and methanol coagulation. In order to coagulate the mixture so that the microfibrillated plant fibers are uniformly dispersed in a masterbatch, acid coagulation, salt coagulation, and a combination of these methods are preferred, and acid coagulation is more preferred. Examples of acids for the coagulation include formic acid, sulfuric acid, hydrochloric acid, and acetic acid. Among these, sulfuric acid is preferred in terms of cost. Examples of usable salts include monovalent to trivalent metal salts (e.g. sodium chloride, magnesium chloride, and calcium salts such as calcium nitrate and calcium chloride). The coagulation of the mixture is preferably performed by adding an acid or salt to adjust the pH of the mixture to 4 to 9 (preferably 6 to 8, more preferably 6.5 to 7 .5) so that the solids are coagulated.

If the mixture is coagulated rapidly, the microfibrillated plant fibers tend to be incorporated in the form of agglomerates like "fuzz balls" in the saponified natural rubber latex, and therefore the microfibrillated plant fibers tend not to be dispersed easily. Hence, the mixture is preferably coagulated in conditions such that the microfibrillated plant fibers are slowly incorporated in the saponified natural rubber latex. From such a point of view, the temperature of the mixture during coagulation is preferably 40°C or less, and more preferably 35°C or less. From the same point of view, the mentioned coagulant such as acid, salt, or methanol is preferably introduced gradually (or, the total amount is preferably dividedly introduced).

(Step (II))

In the step (II), the coagulated matter (agglomerate containing the agglomerated rubber and the microfibrillated plant fibers) obtained in the step (I) is washed to adjust (reduce) the phosphorus content in rubber (natural rubber) to 200 ppm or less. The washing treatment after the saponification treatment enables to reduce the phosphorus content in the natural rubber in the coagulated matter to 200 ppm or less so that the honeycomb cells formed from proteins and phospholipids, which are unique to natural rubber, can be removed.
Examples of the washing method include a method of diluting the rubber fraction with water and then centrifuging the diluted rubber; and a method of diluting the rubber fraction with water, leaving the mixture at rest to allow the rubber to float or sediment, and then removing only the water phase. In the centrifugation method, dilution with water may first be performed so that the rubber fraction of the natural rubber latex accounts for 5 to 40 mass%, preferably 10 to 30 mass%, and then the diluted rubber may be centrifuged at 5,000 to 10,000 rpm for 1 to 60 minutes. This washing may be repeated until the phosphorus content reaches a desired value. Also in the method of leaving the mixture at rest to allow the rubber to float or sediment, the washing treatment may be carried out by repeating addition of water and stirring of the mixture until a desired phosphorus content is reached.
The washing method is not limited to these methods. The washing treatment may be carried out by neutralization with weak alkaline water, such as sodium carbonate, so that the pH reaches 6 to 7, followed by removing the liquid phase.
After the washing treatment, the rubber is usually dried by any known method (e.g. oven, vacuum). In the examples of the present application mentioned below, the rubber was dried at 40°C for 12 hours in vacuum. After the drying, the rubber is kneaded with a two-roll mill, a Bunbury mixer, or the like to give a masterbatch crumb containing a modified natural rubber with a phosphorus content of 200 ppm or less (highly purified natural rubber) and microfibrillated plant fibers. The masterbatch is preferably formed into a sheet with a thickness of a few centimeters with a rolling mill for good cohesiveness and handleability. The masterbatch may contain other components to the extent that they do not inhibit the effects of the present invention.
The microfibrillated plant fibers are oriented in an extrusion direction (in a tire component such as a tread, base tread, sidewall, clinch, tie gum, bead apex, or strip apex, this direction corresponds to the tire circumferential direction, that is, the rotation direction). Thus, the fibers mainly reinforce the rubber composition in the extrusion direction, and only slightly contribute to the reinforcement in a perpendicular direction (tire radial direction) to the extrusion direction. These characteristics make it possible to increase the complex modulus E* in the tire circumferential direction, which contributes to the handling stability, while maintaining the complex modulus E* in the tire radial direction, which contributes to the ride comfort. Thus, handling stability and ride comfort are both ensured. Meanwhile, if the complex modulus E* in the tire circumferential direction is increased by a conventional method such as adding a butadiene rubber that contains syndiotactic crystals, the elongation at break tends to be greatly reduced. In contrast, when the complex modulus E* in the tire circumferential direction is increased according to the present invention, satisfactory elongation at break can be maintained. Therefore, the handling stability, ride comfort, and elongation at break can be improved in a balanced manner.
The rubber composition of the present invention may contain other rubber materials in addition to the modified natural rubber. Examples of other rubber components include diene rubbers such as natural rubber (NR), isoprene rubber (IR), epoxidized natural rubber (ENR), butadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Preferred among these are NR, SBR, and BR, and more preferred are NR and SBR.
In the rubber composition of the present invention, the total content of the modified natural rubber and NR is preferably 5 mass% or more, and more preferably 25 mass% or more, based on 100 mass% of the total rubber component. If the total content is less than 5 mass%, the elongation at break may be insufficient. The total content of the modified natural rubber and NR is preferably 90 mass% or less, and more preferably 80 mass% or less, based on 100 mass% of the total rubber component. If the total content exceeds 90 mass%, the crack growth resistance and reversion resistance may be reduced.
The content of SBR in the rubber composition of the present invention is preferably 5 mass% or more, and more preferably 15 mass% or more, based on 100 mass% of the total rubber component. If the content is below 5 mass%, the elongation at break, hardness, and reversion resistance may be reduced. The content of SBR is preferably 60 mass% or less, and more preferably 30 mass% or less, based on 100 mass% of the total rubber component. If the content exceeds 60 mass%, sufficient fuel economy may not be achieved.
In the rubber composition of the present invention, the content of microfibrillated plant fibers is preferably 1 part by mass or more, more preferably 2 parts by mass or more, and further preferably 3 parts by mass or more, per 100 parts by mass of the total rubber component in the rubber composition. If the content is less than 1 part by mass, the microfibrillated plant fibers are less likely to interact with each other, and thus high complex modulus E* may not be achieved. The content of microfibrillated plant fibers is preferably 20 parts by mass or less, more preferably 15 parts by mass or less, and further preferably 12 parts by mass or less, per 100 parts by mass of the total rubber component in the rubber composition. If the content exceeds 20 parts by mass, the microfibrillated plant fibers may be difficult to

disperse, and thus the elongation at break and fuel economy may be poor.

The rubber composition of the present invention preferably contains carbon black and/or silica. In this case, reinforcement in the tire radial direction (the perpendicular direction to the extrusion direction) can be appropriately achieved, and the handling stability, ride comfort, and elongation at break can be improved in a balanced manner.

The nitrogen adsorption specific surface area ($N_2SA$) of carbon black is preferably 25 $m^2/g$ or larger, and more preferably 80 $m^2/g$ or larger. If the $N_2SA$ is smaller than 25 $m^2/g$, the elongation at break may be insufficient. The $N_2SA$ is preferably 200 $m^2/g$ or smaller, and more preferably 120 $m^2/g$ or smaller. If the $N_2SA$ is larger than 200 $m^2/g$, the fuel economy may be insufficient.

The N2SA of carbon black can be determined in conformity with JIS K 6217-2:2001.

The nitrogen adsorption specific surface area ($N_2SA$) of silica is preferably 70 $m^2/g$ or larger, and more preferably 115 $m^2/g$ or larger. If the $N_2SA$ is smaller than 70 $m^2/g$, the elongation at break may be insufficient. The $N_2SA$ is preferably 300 $m^2/g$ or smaller, and more preferably 250 $m^2/g$ or smaller. If the $N_2SA$ is larger than 300 $m^2/g$, the fuel economy may be insufficient.

The $N_2SA$ of silica can be determined by the BET method in conformity with ASTM D 3037-93.

The content of carbon black is preferably 10 parts by mass or more, and more preferably 30 parts by mass or more, per 100 parts by mass of the total rubber component in the rubber composition. The content of carbon black is preferably 80 parts by mass or less, and more preferably 60 parts by mass or less. If the content is in that range, the handling stability, ride comfort, elongation at break, and compound cost can be improved in a balanced manner.

The content of silica is preferably 3 parts by mass or more, and more preferably 5 parts by mass or more, per 100 parts by mass of the total rubber component in the rubber composition. The content of silica is preferably 20 parts by mass or less, and more preferably 15 parts by mass or less. If the content is in that range, the handling stability, ride comfort, and elongation at break can be improved in a balanced manner. In addition, the rubber composition is less likely to shrink and thus the extrudate has satisfactory dimensional stability.

The total content of carbon black and silica is preferably 25 parts by mass or more, and more preferably 45 parts by mass or more, per 100 parts by mass of the total rubber component in the rubber composition. The total content thereof is preferably 80 parts by mass or less, and more preferably 70 parts by mass or less. If the total content is in that range, the handling stability, ride comfort, and elongation at break can be improved in a balanced manner.

The rubber composition of the present invention preferably contains at least one cross-linkable resin selected from the group consisting of resorcinol resins (condensates), modified resorcinol resins (condensates), cresol resins, modified cresol resins, phenolic resins, and modified phenolic resins. In this case, the complex modulus E* in the tire circumferential direction can be enhanced while the elongation at break is satisfactorily maintained. Moreover, the effect of enhancing the complex modulus E* in the tire circumferential direction caused by the cross-linkable resin(s) is exerted without impairing the enhancement effect caused by the microfibrillated plant fibers. Therefore, the use of the cross-linkable resin(s) together with the microfibrillated plant fibers leads to further increase in the complex modulus E* in the tire circumferential direction.

Examples of the resorcinol resins include resorcinol-formaldehyde condensates. Specific examples thereof include Resorcinols produced by Sumitomo Chemical Co., Ltd., and the like. Examples of the modified resorcinol resins include resorcinol resins in which part of repeating units are alkylated. Specific examples thereof include Penacolite resins B-18-S and B-20 produced by Indspec Chemical Corporation, Sumikanol 620 produced by Taoka Chemical Co., Ltd., R-6 produced by Uniroyal, SRF 1501 produced by Schenectady Chemicals, and Arofene 7209 produced by the Ashland Inc.

Examples of the cresol resins include cresol-formaldehyde condensates. Examples of the modified cresol resins include cresol resins whose terminal methyl group is modified into a hydroxyl group, and cresol resins in which part of repeating units are alkylated. Specific examples include Sumikanol 610 produced by Taoka Chemical Co., Ltd., and PR-X11061 (a cresol resin synthesized from cresol monomers including o-cresol, m-cresol, and p-cresol, in which the content of free cresols remaining in the cresol resin (the content of free monomers) is as small as 0.6 mass% based on 100 mass% of the cresol resin) produced by Sumitomo Bakelite Co., Ltd.

Examples of the phenolic resins include phenol-formaldehyde condensates. Examples of the modified phenolic resins include phenolic resins modified with cashew oil, tall oil, linseed oil, various animal or vegetable oils, unsaturated fatty acids, rosin, alkylbenzene resins, aniline, melamine, and the like.

Preferred among the above cross-linkable resins are modified resorcinol resins and modified phenolic resins, more preferred are modified phenolic resins, and further preferred are cashew oil-modified phenolic resins, in terms of improvement of the handling stability, ride comfort, and elongation at break in a balanced manner.

In the rubber composition of the present invention, the total content of the cross-linkable resins is preferably 1 part by mass or more, and more preferably 1.5 parts by mass or more, per 100 parts by mass of the total rubber component. If the total content thereof is below 1 part by mass, the effects of the cross-linkable resin tend not to be sufficiently obtained. The total content of the cross-linkable resins is preferably 20 parts by mass or less, and more preferably 15 parts by mass or less, per 100 parts by mass of the total rubber component. If the total content thereof

exceeds 20 parts by mass, the dispersibility of the cross-linkable resins tends to be reduced, which tends to reduce the fuel economy and elongation at break.

The rubber composition of the present invention preferably contains a methylene donor. In this case, the cross-linkable resin(s) can be efficiently cured, which contributes to enhancement of the effect of improving the handling stability. Preferred among methylene donors are partial condensates of hexamethoxymethylmelamine (HMMM), partial condensates of hexamethylol melamine pentamethyl ether (HMMPME), and hexamethylenetetramine (HMT), and more preferred are partial condensates of HMMPME.

In the rubber composition of the present invention, the content of the methylene donor(s) is preferably 0.5 parts by mass or more, and more preferably 1 part by mass or more, per 100 parts by mass of the total rubber component. If the content thereof is below 0.5 parts by mass, the amount of methylene may be low and may not sufficiently improve the handling stability. The content of the methylene donor(s) is preferably 5 parts by mass or less, and more preferably 3 parts by mass or less, per 100 parts by mass of the total rubber component. If the content thereof exceeds 5 parts by mass, the elongation at break may be reduced.

The rubber composition of the present invention preferably contains an alkylphenol-sulfur chloride condensate represented by the following formula (1). In this case, a thermally-stable cross-linked structure can be formed compared with in usual sulfur cross-linking, and therefore the handling stability and elongation at break can be greatly enhanced and satisfactory fuel economy can also be achieved.

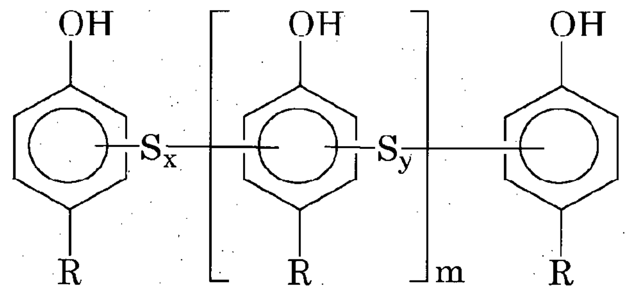
(1)

In the formula, Rs are the same as or different from one another and each represent a C5 to C15 alkyl group or an amyl group; x and y are the same as or different from each other and each represent an integer of 1 to 4; and m represents an integer of 0 to 300.

In terms of good dispersibility of the alkylphenol-sulfur chloride condensate in the rubber component, m represents an integer of 0 to 300, preferably an integer of 0 to 100, and more preferably an integer of 3 to 100. In terms of effective achievement of high hardness (suppression of reversion), x and y each represent an integer of 1 to 4, and are preferably both 2. In terms of good dispersibility of the alkylphenol-sulfur chloride condensate in the rubber component, Rs each represent a C5 to C15 alkyl group or an amyl group, preferably a C8 to C15 alkyl group.

The alkylphenol-sulfur chloride condensate can be prepared by any known method, and the method is not particularly limited. Examples thereof include a method of reacting an alkylphenol and sulfur chloride at a molar ratio of, for example, 1:0.9-1.25.

Exemplary commercial products of the alkylphenol-sulfur chloride condensate include Tackirol V200 (in the formula (1), R = $C_8H_{17}$, x = 2, y = 2, m = an integer of 0 to 100) and TS3101 (in the formula (1), R = $C_{12}H_{25}$, x = 2, y = 2, m = an integer of 170 to 210), both produced by Taoka Chemical Co., Ltd.

In the rubber composition of the present invention, the content of the alkylphenol-sulfur chloride condensate is preferably 0.2 parts by mass or more, and more preferably 1.5 parts by mass or more, per 100 parts by mass of the total rubber component. If the content is below 0.2 parts by mass, the improvement effects of the alkylphenol-sulfur chloride condensate in terms of the hardness and tan $\delta$ may not be sufficiently obtained. The content thereof is preferably 10.0 parts by mass or less, more preferably 5.0 parts by mass or less, and further preferably 3.0 parts by mass or less, per 100 parts by mass of the total rubber component. If the content exceeds 10.0 parts by mass, the elongation at break may be reduced.

The rubber composition of the present invention preferably contains a C5 petroleum resin. In this case, satisfactory handling stability can be achieved. Examples of the C5 petroleum resin include aliphatic petroleum resins mainly formed from an olefin or diolefin in C5 fraction obtained by naphtha cracking.

The C5 petroleum resin preferably has a softening point of 50°C or more, and more preferably 80°C or more. The softening point is preferably 150°C or less, and more preferably 120°C or less. If the softening point is in that range, good adhesion and good elongation at break can be achieved.

The softening point as used herein refers to a temperature at which a ball drops in measurement of the softening point defined in JIS K6220 with a ring and ball softening point measuring apparatus.

The content of the C5 petroleum resin is preferably 0.5 parts by mass or more, and more preferably 1.5 parts by mass or more, per 100 parts by mass of the total rubber component in the rubber composition. The content thereof is preferably 5 parts by mass or less, and more preferably 3 parts by mass or less. If the content thereof is in that range, good adhesion and good elongation at break can be achieved.

The rubber composition of the present invention may optionally contain, in addition to the above components, compounding ingredients conventionally used in the rubber industry, such as oil, zinc oxide, stearic acid, various antioxidants, sulfur, and vulcanization accelerators.

In the rubber composition of the present invention, the ratio (E*a/E*b) of the complex modulus E*a in the extrusion direction (tire circumferential direction) measured at a temperature of 70°C and a dynamic strain amplitude of 2% under an initial elongation of 10% to the complex modulus E*b in the perpendicular direction (tire radial direction) to the extrusion direction measured at a temperature of 70°C and a dynamic strain amplitude of 2% under an initial elongation of 10% is preferably 1.05 to 6 .00. Setting the ratio E*a/E*b in that range contributes to improvement of the handling stability, ride comfort, and elongation at break in a balanced manner. The ratio E*a/E*b is more preferably 2.00 to 6.00.

Specifically, the tire circumferential direction and the tire radial direction herein refer to the directions shown in, for example, Fig. 1 of JP 2009-202865 A.

The E*a and E*b herein are measured according to the method mentioned later in EXAMPLES.

The ratio E*a/E*b can be adjusted by the content of microfibrillated plant fibers, the flexibility of the microfibrillated plant fibers, the degree of disintegration of the microfibrillated plant fibers, the extrusion pressure of the unvulcanized rubber composition, and the like.

Specifically, the ratio E*a/E*b increases as the microfibrillated plant fibers are oriented in the tire circumferential direction at more even intervals, and as a larger amount of microfibrillated plant fibers are used.

The ratio E*a/E*b can also be enhanced by using SPB (1,2-syndiotactic polybutadiene crystal)-containing BR such as VCR617 (product of Ube Industries, Ltd.); however, the microfibrillated plant fibers have an advantage over the SPB-containing BR in that the fibers have a larger effect in enhancing the ratio E*a/E*b.

The complex modulus E*a is preferably 7 to 100, and more preferably 30 to 100, in terms of achieving good handling stability. The complex modulus E*b is preferably 6 to 26 in terms of achieving good ride comfort.

The method for preparing the rubber composition of the present invention may be a known method such as a method including kneading components mentioned above, with a rubber kneading device such as an open roll mill or Banbury mixer, followed by vulcanizing the kneaded mixture.

The rubber composition of the present invention can be used for tire components, and can be suitably used for sidewalls (especially, inner sidewall layers), base treads, tie gums, bead apexes, strip apexes, clinch apexes, and wings.

An inner sidewall layer is an inner layer of a multilayer sidewall; specifically, it is a component shown in, for example, Fig. 1 herein and Fig. 1 of JP 2007-106166 A.

The pneumatic tire of the present invention can be prepared from the rubber composition by a usual method. Specifically, for example, the rubber composition before vulcanization is extruded and processed into the shape of a tire component such as a sidewall, and the resulting component is arranged and assembled with other tire components in a tire building machine by a usual method to form an unvulcanized tire. This unvulcanized tire is heat-pressurized in a vulcanizer, whereby a tire is produced.

## EXAMPLES

Hereinafter, the present invention will be described in more detail based on examples. The examples are not intended to limit the scope of the present invention.

The chemicals used in examples and comparative examples are listed below.
Natural rubber latex: field latex available fromMuhibbah LATEKS Sdn. Bhd.
SBR latex: prepared by the method described later
Microfibrillated plant fibers: NEOFIBER (OJI SEITAI KAISHA, LTD.)
Surfactant: Emal-E (sodium polyoxyethylene lauryl ether sulfate) (KAO Corp.)
NaOH: NaOH (Wako Pure Chemical Industries, Ltd.)
Flocculant: POIZ C-60H (methacrylic acid ester polymer) (KAO Corp.)
Coagulant: 1% sulfuric acid (Wako Pure Chemical Industries, Ltd.)
NR: TSR20
IR: IR2200
SBR: SBR1502 (Sumitomo Chemical Co., Ltd.)
BR 1: BUNA-CB25 (LANXESS)
BR 2: VCR617 (SPB-containing BR) (Ube Industries, Ltd.)
Carbon black 1 : SHOBLACK N219 ($N_2SA$: 104 $m^2/g$) (Cabot Japan K.K.)

Carbon black 2: SHOBLACK N550 ($N_2SA$: 40 $m^2/g$) (Cabot Japan K.K.)
Silica 1: Ultrasil VN3 ($N_2SA$: 175 $m^2/g$) (Degussa)
Silica 2: Z1085Gr ($N_2SA$: 80 $m^2/g$) (Rhodia)
Cross-linkable resin 1: Sumikanol 620 (modified resorcinol resin (modified resorcinol-formaldehyde condensate)) (Taoka Chemical Co., Ltd.)
Cross-linkable resin 2: Sumilite Resin PR12686 (cashew oil-modified phenolic resin) (Sumitomo Bakelite Co., Ltd.)
C5 petroleum resin: Marukarez T-100AS (C5 petroleum resin: aliphatic petroleum resin formed mainly formed from an olefin or diolefin in C5 fraction obtained by naphtha cracking; softening point: 102°C) (Maruzen Petrochemical Co., Ltd.)
Oil: Vivatec 500 (H&R)
Zinc oxide: Ginrei R (Toho Zinc Co., Ltd.)
Stearic acid: stearic acid (NOF Corporation)
Antioxidant (6PPD): ANTIGENE 6C (N-phenyl-N'-(1,3-dimethylbutyl)-p-phenylenediamine) (Sumitomo Chemical Co., Ltd.)
Wax: OZOACE 0355 (Nippon Seiro Co., Ltd.)
20% Oil-containing insoluble sulfur: Crystex HS OT 20 (insoluble sulfur containing 80 mass% of sulfur and 20 mass% of oil) (Flexsys)
Alkylphenol-sulfur chloride condensate: Tackirol V200 (Taoka Chemical Co., Ltd.)
Methylene donor 1: Sumikanol 507A (containing 65 mass% of a modified etherified methylol melamine resin (partial condensate of HMMPME) and 35 mass% of silica and oil) (Sumitomo Chemical Co., Ltd.)
Methylene donor 2: Nocceler H (hexamethylenetetramine (HMT)) (Ouchi Shinko Chemical Industrial Co., Ltd.)
Vulcanization accelerator TBBS: NOCCELER NS (N-tert-butyl-2-benzothiazolylsulphenamide) (Ouchi Shinko Chemical Industrial Co., Ltd.)

(Preparation of aqueous solution of microfibrillated plant fibers)

The microfibrillated plant fibers were diluted with water in an amount 200 times as much as the fibers (in mass ratio) and the dilution was stirred for the period indicated in Table 2 with a cylinder homogenizer (AUTO MIXER Model 20, produced by PRIMIX Corporation, number of revolutions: 8000 rpm) to prepare an aqueous solution of microfibrillated plant fibers, consisting of 0.5 mass% of the microfibrillated plant fibers and 99.5 mass% of water. The stirring time indicated in Table 2 refers to the period during which microfibrillated plant fibers were defibrated by the cylinder homogenizer, and was varied to adjust the degree of disintegration of the microfibrillated plant fibers. The viscosity of the aqueous solution of microfibrillated plant fibers was measured by a tuning-fork vibration viscometer (SV-10, produced by A&D Company, Limited) at ordinary temperature (23°C). The obtained values were recorded in Table 2.

(Preparation of masterbatch)

The concentration of solids (DRC) in the natural rubber latex was adjusted to 30% (w/v). Then, Emal-E (10 g) and NaOH (20 g) were added to the natural rubber latex (1,000 g), and the mixture was saponified for 48 hours at room temperature. Thus, a saponified natural rubber latex was obtained.

Next, the saponified natural rubber latex and the aqueous solution of microfibrillated plant fibers were weighed and compounded so that the mass ratio therebetween after drying was a predetermined value, and the mixture was stirred for one hour at 8,000 rpm with a cylinder homogenizer.

The flocculant (1.5 g) was then added to the stirred mixture (1,000 g) and the resulting mixture was stirred for two minutes at 300 rpm with the cylinder homogenizer.

Then, the coagulant was gradually added to the mixture under stirring at 450 rpm and at 30°C to 35°C with the cylinder homogenizer so that the pH was adjusted to 6.8 to 7.1 to give a coagulated matter. The stirring time was one hour. The obtained coagulated matter was repeatedly washed with water (1,000 ml).

Then, the coagulated matter was air-dried for several hours and further vacuum-dried for 12 hours at 40°C to give a masterbatch (MB). Table 2 shows the information of the obtained MB 1 to MB 11. Here, MB 4 was prepared by using SBR latex instead of the natural rubber latex. MB 5 was prepared without saponification treatment. MB 11 was prepared by one wash instead of repeated washes.

The SBR latex was prepared by the following method. The chemicals used are listed below.
Water: distilled water
Emulsifier (1) : rosin acid soap (Harima Chemicals, Inc.)
Emulsifier (2): fatty acid soap (Wako Pure Chemical Industries, Ltd.)
Electrolyte: sodium phosphate (Wako Pure Chemical Industries, Ltd.)
Styrene: styrene (Wako Pure Chemical Industries, Ltd.)
Butadiene: 1,3-butadiene (Takachiho Chemical Industrial Co., Ltd.)

Molecular weight regulator: tert-dodecyl mercaptan (Wako Pure Chemical Industries, Ltd.)
Radical initiator: paramenthane hydroperoxide (NOF Corp.)
SFS: sodium formaldehyde sulfoxylate (Wako Pure Chemical Industries, Ltd.)
EDTA: sodium ethylenediaminetetraacetate (Wako Pure Chemical Industries, Ltd.)
Catalyst: ferric sulfate (Wako Pure Chemical Industries, Ltd.)
Polymerization terminator: N,N'-dimethyldithiocarbamate (Wako Pure Chemical Industries, Ltd.)

(Preparation of SBR latex)

According to the recipe shown in Table 1, a pressure-resistant reactor equipped with a stirrer was charged with the water, emulsifier (1), emulsifier (2), electrolyte, styrene, butadiene, and molecular weight regulator. The reactor temperature was set to 5°C. An aqueous solution containing the radical initiator and SFS dissolved therein and an aqueous solution containing the EDTA and catalyst dissolved therein were put into the reactor to initiate polymerization. Five hours after the initiation of polymerization, the polymerization terminator was added to stop the reaction. Thus, SBR latex was obtained.

[Table 1]

| | | SBR latex |
|---|---|---|
| Recipe (parts by mass) | Water | 200 |
| | Emulsifier (1) | 4.5 |
| | Emulsifier (2) | 0.15 |
| | Electrolyte | 0.8 |
| | Styrene | 25 |
| | Butadiene | 75 |
| | Molecular weight regulator | 0.2 |
| | Radical initiator | 0.1 |
| | SFS | 0.15 |
| | EDTA | 0.07 |
| | Catalyst | 0.05 |
| | Polymerization terminator | 0.2 |

With respect to the rubber fractions in MB 1 to MB 11 and TSR20, the nitrogen content, phosphorus content, and gel content were determined by the following methods. Table 2 shows the results.

(Determination of nitrogen content)

The nitrogen content was determined by gas chromatography after pyrolysis.

(Determination of phosphorus content)

The phosphorus content was determined by an ICP optical emission spectrometer (P-4010, Hitachi, Ltd.).

Furthermore, $^{31}$P-NMR measurement of phosphorus was performed using an NMR analyzer (400 MHz, AV400M, Bruker Japan Co., Ltd.). In the measurement, the measured peak of the P atoms in an 80% phosphoric acid aqueous solution was used as a reference point (0 ppm) ; and an extract prepared by chloroform extraction from raw rubber was purified and then the purified product was dissolved in $CDCl_3$ for measurement.

(Determination of gel content)

Raw rubber was cut to a size of 1 mm × 1 mm to prepare a sample, and the sample was weighed to 70.00 mg. Toluene (35 mL) was added thereto, and the mixture was allowed to stand still in a cool, dark place for one week. Next, the mixture was centrifuged so that a gel fraction that was insoluble in toluene was sedimented, and a toluene-soluble supernatant was removed. Then, only the gel fraction was solidified with methanol and then dried, and the mass of the dried gel fraction was measured. The gel content (mass%) was determined by the following equation:

$$\text{Gel content (mass\%)} = [\text{mass after drying (mg)}]/[\text{initial mass of sample (mg)}] \times 100.$$

[Table 2]

| | Aqueous solution of fibers | | Amount of fibers per 100 parts by mass of the rubber component | Rubber for MB | | | |
|---|---|---|---|---|---|---|---|
| | Stirring time (defibration time) (hours) | Viscosity (mPa·s) Target value: 5.0 to 8.0 | | Type of rubber | Nitrogen content (mass%) | Phosphorus content (ppm) | Gel content (mass%) |
| MB 1 | 1.0 | 6.1 | 20 | HPNR | 0.10 | 98 | 6.7 |
| MB 2 | 1.0 | 6.0 | 10 | HPNR | 0.099 | 98 | 6.8 |
| MB 3 | 1.0 | 6.0 | 30 | HPNR | 0.11 | 100 | 5.4 |
| MB 4 | 1.0 | 6.0 | 20 | SBR | n/a | n/a | 13 |
| MB 5 | 1.0 | 6.0 | 20 | NR | 0.36 | 433 | 33 |
| MB 6 | 3.0 | 6.7 | 20 | HPNR | 0.11 | 105 | 5.9 |
| MB 7 | 0.3 | 1.9 | 20 | HPNR | 0.12 | 101 | 6.4 |
| MB 8 | 0.1 | 1.4 | 20 | HPNR | 0.096 | 101 | 6.3 |
| MB 9 | 1.0 | 5.4 | 20 | HPNR | 0.14 | 180 | 13.2 |
| MB 10 | 1.0 | 6.3 | 20 | HPNR | 0.067 | 45 | 5.1 |
| MB 11 | 1.0 | 6.2 | 20 | NR | 0.15 | 240 | 15.1 |
| TSR20 | - | - | - | NR | 0.34 | 433 | 32 |

As shown in Table 2, the contents of nitrogen, phosphorus, and gel in MBs 1 to 3 and 6 to 10 which contain HPNR were reduced in comparison with TSR20. Also in these MBs, the $^{31}P$ NMR measurement did not detect any peak ascribed to phospholipids between -3 and 1 ppm.

(Examples and Comparative Examples)

According to each recipe shown in the upper part of Table 3 or 4, the chemicals other than the sulfur, vulcanization accelerator, and alkylphenol-sulfur chloride condensate were kneaded with a 1.7-L Bunbury mixer (Kobe Steel, Ltd.). Then, the sulfur, vulcanization accelerator, and alkylphenol-sulfur chloride condensate were added to the obtained kneaded mixture and the resulting mixture was kneaded with an open roll mill, whereby an unvulcanized rubber composition for an inner sidewall layer was obtained.

The obtained unvulcanized rubber composition for an inner sidewall layer was extruded and processed along with an unvulcanized rubber composition for an outer sidewall layer and an unvulcanized rubber composition for a clinch apex in a triple cold-feed extruder. Then, the resulting product was assembled with other tire components in a tire building machine to form a raw tire. The raw tire was vulcanized at 170°C for 12 minutes to prepare a test tire (205/65R15). A schematic cross-sectional view of the thus obtained test tires is shown in Fig. 1. The outer sidewall layer 2 was prepared according to the recipe shown in the upper part of Table 5, by the same method as for the inner sidewall layer 1. The finished thicknesses of the inner sidewall layer 1 and of the outer sidewall layer 2 both were set to 1.25 mm. The properties of the test tires were evaluated by the following tests.

(Viscoelasticity test)

A rectangular rubber test piece was cut out of the obtained test tire such that the long side of the test piece

was along the circumferential direction about the tire axis. Thus, rubber test piece 1 (size: 20 mm in length, 3 mm in width, and 2 mm in thickness) was obtained. Furthermore, another rectangular rubber test piece was cut out such that the long side of the test piece was along the radial direction about the tire axis. Thus, rubber test piece 2 (size: the same as that of the rubber test piece 1) was obtained.

With respect to the obtained rubber test pieces 1 and 2, the complex modulus E*a (MPa) in the tire circumferential direction and the complex modulus E*b (MPa) in the tire radial direction were determined at a temperature of 70°C, a frequency of 10 Hz, an initial strain of 10%, and a dynamic strain of 2% (strain in the long-side direction) by using a viscoelastic spectrometer VES (Iwamoto Seisakusho Co., Ltd.). A greater E* value indicates higher rigidity.

Also, an E*a value in the targeted range indicates better steering response and better handling stability. An E*b value in the targeted range indicates a higher ability to absorb the shock due to irregularities on the road surface, and better ride comfort. A ratio E*a/E*b in the targeted range indicates a better transient characteristic (easier returning of a vehicle when the steering wheel is returned to the straight-ahead position immediately after cornering with a certain steering angle).

In addition, the tan $\delta$ of the rubber test piece 1 was measured by the above evaluation method. A smaller value of tan $\delta$ (at 70°C) indicates better fuel economy.

(Tensile test)

A No. 3 dumbbell specimen from the rubber test piece 1 was subjected to a tensile test at ordinary temperature according to JIS K 6251 2010 "Rubber, vulcanized or thermoplastic -- Determination of tensile stress-strain properties", and the elongation at break EB (%) of the test piece was determined. A greater elongation at break EB (%), indicates better durability.

(Sheet processability)

The unvulcanized rubber compositions were extruded, and then shaped into a predetermined sidewall. The resulting shaped products were visually or tactually evaluated for the edge conditions, the degree of rubber scorch, the degree of adhesion between rubber products, the flatness, and the presence of agglomerates of microfibrillated plant fibers. The results of Comparative Example 1 were regarded as 100, and the results of each composition were expressed as an index value. A greater value indicates better sheet processability.

With respect to the edge conditions, the straightest and smoothest edges were evaluated as good. With respect to the degree of rubber scorch, the absence of irregularities due to cured bits on a 15-cm-square, 2-mm-thick sheet cut out of the shaped product was evaluated as good. With respect to the flatness, the sheet that was flat enough to adhere tightly to a flat plate was evaluated as good. The presence of agglomerates was visually evaluated relative to a reference level: 0.1 agglomerates/$cm^2$ (10 agglomerates/100 $cm^2$) on a section of the rubber sheet.

(Handling stability, Ride comfort)

All wheels of a vehicle (engine size: 3,000 cc) were equipped with the test tires, and the vehicle was driven on a test course under the common driving conditions. The control stability (handling stability) upon steering and the ride comfort were sensory evaluated by a test driver. These results of Comparative Example 1 were each regarded as 100, and the results of each composition were expressed as index values. A greater index value of handling stability indicates better handling stability, and a greater index value of ride comfort indicates better ride comfort.

(Rolling resistance)

The rolling resistance of the test tires was measured by a rolling resistance tester with a center rim of JIS standard at an internal pressure of 230 kPa, a load of 3.43 kN, and a speed of 80km/h, in accordance with JIS D 4234:2009. Then, the improvement rate of the rolling resistance (the rate of decrease in rolling resistance) was calculated by the following equation:

(Improvement rate of rolling resistance) = (rolling resistance of Comparative Example 1) - (rolling resistance of each composition)/(rolling resistance of Comparative Example 1) × 100.

[Table 3]

Composition for inner SW layer

| | | Comparative Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Recipe (part(s) by mass) | NR (TSR20) | 80 | 80 | 80 | 80 | 60 | 60 | 30 | 30 | – | – | 30 |
| | IR (IR2200) | – | – | – | – | 20 | 20 | – | – | 20 | 40 | – |
| | SBR (SBR1502) | 20 | 20 | 20 | 20 | 20 | 20 | 20 | 20 | 20 | 0 | 20 |
| | BR1 (CB25) | – | – | – | – | – | – | – | – | – | – | – |
| | BR2 (VCR617) | – | – | – | – | – | – | – | – | 60 | 60 | – |
| | MB No. | – | – | – | – | – | – | 4 | 5 | – | – | 11 |
| | MB Amount | | | | | | | 60 | 60 | | | 60 |
| | MB (Rubber content) | | | | | | | 50 | 50 | | | 50 |
| | MB (Fiber content) | | | | | | | 10 | 10 | | | 10 |
| | Microfibrillated plant fibers | – | – | – | – | – | 10 | – | – | – | – | – |
| | Carbon black 1 (N219) | 37 | 37 | 37 | – | – | 37 | 37 | 37 | – | – | 37 |
| | Carbon black 2 (N550) | – | – | 13 | 60 | 60 | – | – | – | 60 | 60 | – |
| | Silica 1 (VN3) | 10 | 10 | 10 | – | – | 10 | 10 | 10 | – | – | 10 |
| | Silica 2 (Z1085Gr) | – | – | – | – | – | – | – | – | – | – | – |
| | (Total of fillers) | 47 | 47 | 60 | 60 | 60 | 47 | 47 | 47 | 60 | 60 | 47 |
| | Cross-linkable resin 1 (Sumikanol 620) | – | 1.5 | – | – | – | – | – | – | – | – | – |
| | Cross-linkable resin 2 (PR12686) | 3 | – | 15 | 15 | 15 | 3 | 3 | 3 | 15 | 15 | 3 |
| | C5 petroleum resin | 2 | 2 | 2 | 2 | 2 | 2 | 2 | 2 | 2 | 2 | 2 |
| | Oil | – | – | – | – | – | – | – | – | – | – | – |
| | Zinc oxide | 5 | 5 | 5 | 5 | 5 | 5 | 5 | 5 | 5 | 5 | 5 |
| | Stearic acid | 2 | 2 | 2 | 2 | 2 | 2 | 2 | 2 | 2 | 2 | 2 |
| | Antioxidant 6PPD | 1 | 1 | 1 | 1 | 1 | 1 | 1 | 1 | 1 | 1 | 1 |
| | Wax | 1.5 | 1.5 | 1.5 | 1.5 | 1.5 | 1.5 | 1.5 | 1.5 | 1.5 | 1.5 | 1.5 |
| | 20% Oil-containing insoluble sulfur | 3.13 | 3.13 | 3.13 | 3.13 | 6.25 | 3.13 | 3.13 | 3.13 | 6.25 | 6.25 | 3.13 |
| | Alkylphenol-sulfur chloride condensate | 2 | 2 | 2 | 2 | 2 | 2 | 2 | 2 | 2 | 2 | 2 |
| | Methylene donor 1 (Sumikanol 507A) | 1.44 | 1.75 | – | – | – | 1.44 | 1.44 | 1.44 | – | – | 1.44 |
| | Methylene donor 2 (HMT) | – | – | 1.5 | 1.5 | 1.5 | – | – | – | 1.5 | 1.5 | – |
| | Vulcanization accelerator TBBS | 1.1 | 1.1 | 1.1 | 1.1 | 1.1 | 1.1 | 1.1 | 1.1 | 1.1 | 1.1 | 1.1 |
| Evaluation | E* in tire circumferential direction (E*a) (at 70° C) Primary target: 7 to 100 Secondary target: 30 to 100 | 10.16 | 6.82 | 28.5 | 41.2 | 61.2 | 40.8 | 44.5 | 38.9 | 71.5 | 65.4 | 40.5 |
| | E* in tire radial direction (E*b) (at 70 °C) Primary target: 7 to 26 Secondary target: 10 to 26 | 10.16 | 6.82 | 28.50 | 41.62 | 60.59 | 13.64 | 14.13 | 13.65 | 65.60 | 59.45 | 14.06 |
| | Ratio E*a/E*b Primary target: 1.05 to 6.00 Secondary target: 2.00 to 6.00 | 1.00 | 1.00 | 1.00 | 0.99 | 1.01 | 2.99 | 3.15 | 2.85 | 1.09 | 1.10 | 2.88 |
| | tan δ (at 70° C) Target: 0.150 | 0.125 | 0.13 | 0.155 | 0.12 | 0.114 | 0.135 | 0.159 | 0.124 | 0.129 | 0.123 | 0.122 |
| | Elongation at break EB (%) Target: > 200 | 475 | 470 | 295 | 245 | 105 | 245 | 195 | 235 | 85 | 105 | 195 |
| | Index of sheet processability Target: > 90 | 100 | 100 | 95 | 100 | 85 | 60 | 100 | 85 | 105 | 105 | 85 |
| | Index of handling stability Target: ≥ 100 | 100 | 80 | 115 | 125 | 130 | 127 | 125 | 129 | 135 | 130 | 130 |
| | Index of ride comfort Target: ≥ 90 | 100 | 110 | 85 | 80 | 70 | 100 | 100 | 100 | 70 | 75 | 100 |
| | Improvement rate of rolling resistance (%) | Reference | -0.4 | -2.4 | 0.4 | 0.9 | -0.8 | -2.7 | 0.1 | -0.3 | 0.2 | 0.2 |

[Table 4]

Composition for inner SW layer

| | | Example | | | | | | | | | | | | | | | | | | | | | | | |
|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 20 | 21 | 22 | 23 | 24 | 25 |
| Recipe (part(s) by mass) | NR (TSR20) | 70 | 55 | 30 | 70 | 55 | 30 | 55 | 55 | 55 | 30 | 30 | 30 | 13 | - | 30 | 47 | 30 | 30 | 30 | 30 | 30 | 30 | 30 | 10 |
| | IR (IR2200) | - | - | - | - | - | - | - | - | - | - | - | - | - | - | - | - | - | - | - | - | - | - | - | - |
| | SBR (SBR1502) | 20 | 20 | 20 | 20 | 20 | 20 | 20 | 20 | 20 | 20 | 20 | 20 | 20 | - | 20 | 20 | 20 | 20 | 20 | 20 | 20 | 20 | 20 | - |
| | BR1 (CB25) | - | - | - | - | - | - | - | - | - | - | - | - | - | - | - | - | - | - | - | - | - | - | - | 40 |
| | BR2 (VCR617) | - | - | - | - | - | - | - | - | - | - | - | - | - | - | - | - | - | - | - | - | - | - | - | - |
| | MB No. | 1 | 1 | 1 | 1 | 1 | 1 | 1 | 1 | 1 | 1 | 1 | 3 | 3 | 1 | 2 | 3 | 6 | 7 | 9 | 10 | 3 | 1 | 1 | 1 |
| | MB Amount | 12 | 30 | 60 | 12 | 30 | 60 | 30 | 30 | 30 | 60 | 60 | 65 | 87 | 120 | 55 | 43 | 60 | 60 | 60 | 60 | 65 | 60 | 60 | 60 |
| | MB (Rubber content) | 10 | 25 | 50 | 10 | 25 | 50 | 25 | 25 | 25 | 50 | 50 | 50 | 67 | 100 | 50 | 33 | 50 | 50 | 50 | 50 | 50 | 50 | 50 | 50 |
| | MB (Fiber content) | 2 | 5 | 10 | 2 | 5 | 10 | 5 | 5 | 5 | 10 | 10 | 15 | 20 | 20 | 5 | 10 | 10 | 10 | 10 | 10 | 15 | 10 | 10 | 10 |
| | Microfibrillated plant fibers | - | - | - | - | - | - | - | - | - | - | - | - | - | - | - | - | - | - | - | - | - | - | - | - |
| | Carbon black 1 (N219) | 37 | 37 | 37 | 37 | 37 | 37 | 37 | 37 | 37 | 42 | 47 | - | 25 | 25 | 37 | 37 | 37 | 37 | 37 | 37 | 37 | 37 | 40 | 37 |
| | Carbon black 2 (N550) | - | - | - | - | - | - | - | - | - | - | - | 60 | - | - | - | - | - | - | - | - | - | - | - | - |
| | Silica 1 (VN3) | 10 | 10 | 10 | 10 | 10 | 10 | 10 | 10 | 10 | 10 | 10 | 10 | - | - | 10 | 10 | 10 | 10 | 10 | 10 | 10 | 10 | - | 10 |
| | Silica 2 (Z1085Gr) | - | - | - | - | - | - | - | - | - | - | - | - | - | - | - | - | - | - | - | - | - | - | 10 | - |
| | (Total of fillers) | 47 | 47 | 47 | 47 | 47 | 47 | 47 | 47 | 47 | 52 | 57 | 70 | 25 | 25 | 47 | 47 | 47 | 47 | 47 | 47 | 47 | 47 | 50 | 47 |
| | Cross-linkable resin 1 (Sumikanol 620) | - | - | - | 1.5 | 1.5 | 1.5 | - | - | - | - | - | - | - | - | - | - | - | - | - | - | - | - | - | - |
| | Cross-linkable resin 2 (PR12686) | 3 | 3 | 3 | - | - | - | 6 | 9 | 15 | 3 | 3 | 3 | 15 | - | 3 | 3 | 3 | 3 | 3 | 3 | 3 | 3 | 3 | 3 |
| | C5 petroleum resin | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Oil | - | - | - | - | - | - | - | - | - | - | - | - | - | - | - | - | - | - | - | - | - | - | - | - |
| | Zinc oxide | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant 6PPD | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | 20% Oil-containing insoluble sulfur | 3.13 | 3.13 | 3.13 | 3.13 | 3.13 | 3.13 | 3.13 | 3.13 | 3.13 | 3.13 | 3.13 | 3.13 | 3.13 | 2 | 3.13 | 3.13 | 3.13 | 3.13 | 3.13 | 3.13 | 3.13 | 3.13 | 3.13 | 3.13 |
| | Alkylphenol-sulfur chloride condensate | 2 | 2 | 2 | 2 | 2 | 2 | 2 | 2 | 2 | 2 | 2 | 2 | 2 | - | 2 | 2 | 2 | 2 | 2 | 2 | 2 | - | 2 | 2 |
| | Methylene donor 1 (Sumikanol 507A) | 1.44 | 1.44 | 1.44 | 1.44 | 1.44 | 1.44 | 2.88 | 4.32 | - | 1.44 | 1.44 | 1.44 | - | - | 1.44 | 1.44 | 1.44 | 1.44 | 1.44 | 1.44 | 1.44 | 1.44 | 1.44 | 1.44 |
| | Methylene donor 2 (HMT) | - | - | - | - | - | - | - | - | 1.5 | - | - | - | 1.5 | - | - | - | - | - | - | - | - | - | - | - |
| | Vulcanization accelerator TBBS | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 |
| Evaluation | E* in tire circumferential direction (E*a) (at 70° C) Primary target: 7 to 100 Secondary target: 30 to 100 | 12.5 | 17.3 | 42.7 | 9.6 | 13.8 | 32.2 | 28.0 | 41.2 | 62.5 | 52.1 | 61.8 | 73.5 | 44.8 | 42.1 | 17.1 | 40.8 | 44.3 | 42.7 | 41.7 | 45.1 | 59.8 | 38.7 | 43.1 | 42.2 |
| | E* in tire radial direction (E*b)(at 70°C) Primary target: 7 to 26 Secondary target: 10 to 26 | 10.59 | 11.14 | 13.51 | 8.53 | 8.66 | 10.35 | 13.91 | 14.46 | 25.51 | 16.75 | 20.32 | 23.41 | 13.02 | 7.02 | 11.03 | 14.12 | 13.18 | 13.51 | 13.28 | 13.88 | 18.34 | 12.32 | 13.60 | 13.11 |
| | Ratio E*a/E*b Primary target: 1.05 to 6.00 Secondary target: 2.00 to 6.00 | 1.18 | 1.55 | 3.16 | 1.12 | 1.59 | 3.11 | 2.01 | 2.85 | 2.45 | 3.11 | 3.04 | 3.14 | 3.44 | 6.00 | 1.55 | 2.89 | 3.36 | 3.16 | 3.14 | 3.25 | 3.26 | 3.14 | 3.17 | 3.22 |
| | tan δ (at 70° C) Target: 0.150 | 0.137 | 0.107 | 0.116 | 0.129 | 0.121 | 0.114 | 0.107 | 0.109 | 0.112 | 0.135 | 0.145 | 0.121 | 0.105 | 0.087 | 0.106 | 0.124 | 0.109 | 0.116 | 0.118 | 0.112 | 0.119 | 0.134 | 0.115 | 0.106 |
| | Elongation at break EB (%) Target: > 200 | 445 | 405 | 335 | 430 | 365 | 290 | 330 | 265 | 205 | 295 | 225 | 210 | 355 | 450 | 410 | 290 | 350 | 335 | 320 | 350 | 280 | 370 | 240 | 315 |
| | Index of sheet processability Target: > 90 | 105 | 105 | 105 | 100 | 100 | 100 | 105 | 105 | 105 | 105 | 105 | 95 | 95 | 105 | 105 | 100 | 110 | 100 | 95 | 105 | 95 | 105 | 105 | 95 |
| | Index of handling stability Target: ≥ 100 | 105 | 110 | 130 | 100 | 106 | 120 | 115 | 128 | 135 | 125 | 135 | 135 | 130 | 129 | 110 | 125 | 130 | 130 | 130 | 130 | 135 | 125 | 130 | 130 |
| | Index of ride comfort Target: ≥ 90 | 100 | 100 | 100 | 105 | 104 | 100 | 100 | 100 | 90 | 95 | 92 | 90 | 100 | 110 | 100 | 100 | 100 | 100 | 100 | 100 | 94 | 100 | 100 | 100 |
| | Improvement rate of rolling resistance (%) | -1.0 | 1.4 | 0.7 | -0.3 | 0.3 | 0.9 | 1.4 | 1.3 | 1.0 | -0.8 | -1.6 | 0.3 | 1.6 | 3.0 | 1.5 | 0.1 | 1.3 | 0.7 | 0.6 | 1.0 | 0.5 | -0.7 | 0.8 | 1.5 |

[Table 5]

Composition for outer SW layer

| | | | Reference Example 1 |
|---|---|---|---|
| Recipe (part(s) by mass) | NR (TSR20) | | 50 |
| | IR (IR2200) | | - |
| | SBR (SBR1502) | | - |
| | BR1 (CB25) | | 25 |
| | BR2 (VCR617) | | 25 |
| | MB | No. | - |
| | | Amount (Rubber content) (Fiber content) | |
| | Microfibrillated plant fibers | | - |
| | Carbon black 1 (N219) | | - |
| | Carbon black 2 (N550) | | 37 |
| | Silica 1 (VN3) | | - |
| | Silica 2 (Z1085Gr) | | - |
| | (Total of fillers) | | 37 |
| | Cross-linkable resin 1 (Sumikanol 620) | | - |
| | Cross-linkable resin 2 (PR12686) | | - |
| | C5 petroleum resin | | 2 |
| | Oil | | 7 |
| | Zinc oxide | | 4 |
| | Stearic acid | | 2 |
| | Antioxidant 6PPD | | 3 |
| | Wax | | 1.5 |
| | 20% Oil-containing insoluble sulfur | | 2.3 |
| | Alkylphenol-sulfur chloride condensate | | - |
| | Methylene donor 1 (Sumikanol 507A) | | - |
| | Methylene donor 2 (HMT) | | - |
| | Vulcanization accelerator TBBS | | 0.8 |
| Evaluation | E* in tire circumferential direction (E*a) (at 70° C) Primary target: 7 to 100 Secondary target: 30 to 100 | | 3.75 |
| | E* in tire radial direction (E*b)(at 70°C) Primary target: 7 to 26 Secondary target: 10 to 26 | | 1.12 |
| | Ratio E*a/E*b Primary target: 1.05 to 6.00 Secondary target: 2.00 to 6.00 | | 3.35 |
| | tan δ (at 70° C) Target: 0.150 | | 0.115 |
| | Elongation at break EB (%) Target: > 200 | | 545 |
| | Index of sheet processability Target: > 90 | | 100 |

Tables 3 and 4 show that the handling stability, ride comfort, and durability were improved in a balanced manner in Examples in which a MB containing a modified natural rubber with a phosphorus content of 200 ppm or less and microfibrillated plant fibers was used, compared with Comparative Example 1. Also in Examples, the fuel economy and processability were satisfactory.

In contrast, in Comparative Examples 2 to 5 in which the MB was not used, not all of the handling stability, ride comfort, elongation at break, and processability reached the target value, and thus balanced properties were not achieved.

In Comparative Example 6 in which microfibrillated plant fibers were added at the time of kneading, the microfibrillated plant fibers could not be sufficiently dispersed. Consequently, the processability was significantly poor.

In Comparative Examples 7 and 8 in which a masterbatch without HPNR was used, the microfibrillated plant fibers could not be sufficiently dispersed. Consequently, the elongation at break and the processability were poor.

In Comparative Examples 9 and 10 in which VCR617 was used, good handling stability was exhibited; however, the ride comfort was poor. In addition, the elongation at break was significantly poor.

In Comparative Example 11 in which a masterbatch with a large content of phosphorus in rubber was used, the microfibrillated plant fibers could not be sufficiently dispersed. Consequently, the elongation at break and the processability were poor.

Here, the above examples show the results in the case where the rubber composition of the present invention is used for an inner sidewall layer. Similar effects can also be exhibited in the case where the rubber composition is used for other tire components such as strip apexes, bead apexes, and clinch apexes. Strip apexes, bead apexes, and clinch apexes have a small strain during driving, and rarely show breakage or crack growth. Accordingly, if the rubber composition of the present invention is used for these components, the target value of the elongation at break is set to about 150% (preferably 200%). Since base treads, wings, and tie gums have a larger strain during driving than that of the three components, the target value of the elongation at break needs to be set to about 300% (preferably 350%). The present invention is applicable when the amount of cross-linking agent is reduced to reduce E*.

REFERENCE SIGNS LIST

1: Inner sidewall layer
2: Outer sidewall layer
3: Strip apex
4: Base tread
5: Bead apex
6: Clinch apex
7: Wing
8: Tie gum (located between carcass and inner liner)

The present invention provides a rubber composition which makes it possible to improve the handling stability, ride comfort, and elongation at break in a balanced manner and at the same time to achieve satisfactory processability and fuel economy; and also provides a pneumatic tire formed from the rubber composition. The present invention relates to a rubber composition including a masterbatch that includes: a modified natural rubber with a phosphorus content of 200 ppm or less; and microfibrillated plant fibers. The rubber composition preferably has a ratio (E*a/E*b) of a complex modulus E*a in an extrusion direction to a complex modulus E*b in a perpendicular direction to the extrusion direction, both measured at a temperature of 70°C and a dynamic strain amplitude of 2% under an initial elongation of 10%, of 1.05 to 6 .00, wherein the complex modulus E*a is 7 to 100 MPa.

## Claims

1. A rubber composition, comprising a masterbatch that comprises:

   a modified natural rubber with a phosphorus content of 200 ppm or less; and
   microfibrillated plant fibers.

2. The rubber composition according to claim 1, wherein the rubber composition has a ratio (E*a/E*b) of a complex modulus E*a in an extrusion direction to a complex modulus E*b in a perpendicular direction to the extrusion direction, both measured at a temperature of 70°C and a dynamic strain amplitude of 2% under an initial elongation of 10%, of 1.05 to 6 .00, wherein the complex modulus E*a is 7 to 100 MPa.

3. The rubber composition according to claim 1, wherein the masterbatch comprises 5 to 30 parts by mass of the microfibrillated plant fibers relative to 100 parts by mass of the modified natural rubber.

4. The rubber composition according to claim 1, wherein the rubber composition comprises at least one of a carbon black with a nitrogen adsorption specific surface area of 25 to 200 $m^2/g$ and a silica with a nitrogen adsorption specific surface area of 70 to 300 $m^2/g$, and the rubber composition has a total content of the carbon black and the silica of 25 to 80 parts by mass per 100 parts by mass of the total rubber component.

5. The rubber composition according to claim 1,

wherein the rubber composition comprises at least one cross-linkable resin selected from the group consisting of resorcinol resins, modified resorcinol resins, cresol resins, modified cresol resins, phenolic resins, and modified phenolic resins, and
the rubber composition has a total content of the cross-linkable resins of 1 to 20 parts by mass per 100 parts by mass of the total rubber component.

**6.** The rubber composition according to claim 1,
wherein the rubber composition comprises an alkylphenol-sulfur chloride condensate represented by the following formula (1):

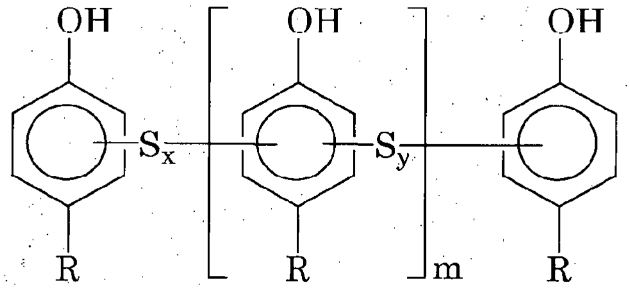

(1)

wherein Rs are the same as or different from one another and each represent an C5 to C15 alkyl group or an amyl group; x and y are the same as or different from each other and each represent an integer of 1 to 4; and m represents an integer of 0 to 300, and
the rubber composition has a content of the alkylphenol-sulfur chloride condensate of 0.2 to 10 parts by mass per 100 parts by mass of the total rubber component.

**7.** The rubber composition according to claim 1,
wherein the rubber composition is for use in a tire component.

**8.** The rubber composition according to claim 7,
wherein the tire component is a sidewall, a base tread, a tie gum, a bead apex, a strip apex, a clinch apex, or a wing.

**9.** A pneumatic tire, formed from the rubber composition according to claim 1.

**Patentansprüche**

**1.** Kautschukzusammensetzung, die ein Masterbatch umfasst, das umfasst:

einen modifizierten Naturkautschuk mit einem Phosphorgehalt von 200 ppm oder weniger; und
mikrofibrillierte Pflanzenfasern.

**2.** Kautschukzusammensetzung nach Anspruch 1,
wobei die Kautschukzusammensetzung ein Verhältnis (E*a/E*b) eines komplexen Moduls E*a in einer Extrusionsrichtung zu einem komplexen Modul E*b in einer rechtwinkligen Richtung zu der Extrusionsrichtung, die beide bei einer Temperatur von 70°C und einer dynamischen Spannungsamplitude von 2% unter einer initialen Dehnung von 10% gemessen sind, von 1,05 bis 6,00 aufweist, wobei der komplexe Modul E*a 7 bis 100 MPa beträgt.

**3.** Kautschukzusammensetzung nach Anspruch 1,
wobei das Masterbatch 5 bis 30 Masseteile der mikrofibrillierten Pflanzenfasern relativ zu 100 Masseteile des modifizierten Naturkautschuks umfasst.

**4.** Kautschukzusammensetzung nach Anspruch 1,
wobei die Kautschukzusammensetzung zumindest eines umfasst aus
einem Kohleschwarz mit einer Stickstoffadsorption spezifischen Oberfläche von 25 bis 200 $m^2/g$ und
einem Siliciumoxid mit einer Stickstoffadsorption spezifischen Oberfläche von 70 bis 300 $m^2/g$, und
die Kautschukzusammensetzung einen Gesamtgehalt des Kohleschwarz und des Siliciumoxids von 25 bis 80 Masseteile pro 100 Masseteile des gesamten Kautschukbestandteils aufweist.

5. Kautschukzusammensetzung nach Anspruch 1,
wobei die Kautschukzusammensetzung zumindest ein vernetzbares Harz ausgewählt aus der Gruppe bestehend aus Resorcinharz, modifiziertes Resorcinharz, Cresolharz, modifiziertes Cresolharz, phenolisches Harz und modifiziertes phenolisches Harz umfasst, und
die Kautschukzusammensetzung einen Gesamtgehalt der vernetzbaren Harze von 1 bis 20 Masseteile pro 100 Masseteile des gesamten Kautschukbestandteils aufweist.

6. Kautschukzusammensetzung nach Anspruch 1,
wobei die Kautschukzusammensetzung ein Alkylphenol-Schwefelchlorid-Kondensat umfasst, das durch die folgende Formel (1) dargestellt ist:

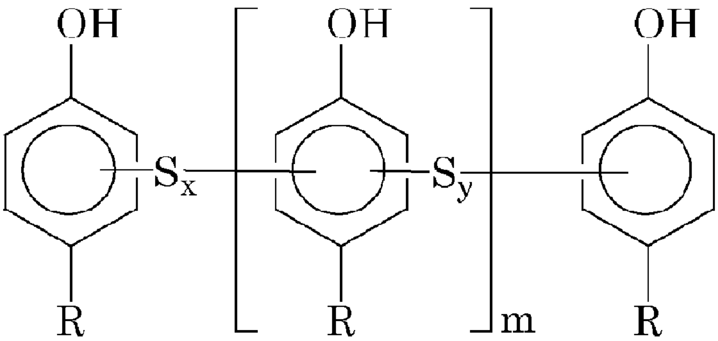
(1)

wobei Rs gleich oder unterschiedlich voneinander sind und jeweils eine C5 bis C15 Alkylgruppe oder eine Amylgruppe darstellen; x und y gleich oder unterschiedlich voneinander sind und jeweils eine ganze Zahl von 1 bis 4 darstellen; und m eine ganze Zahl von 0 bis 300 darstellt, und
die Kautschukzusammensetzung einen Gehalt des Alkylphenol-Schwefelchlorid-Kondensats von 0,2 bis 10 Masseteile pro 100 Masseteile des gesamten Kautschukbestandteils aufweist.

7. Kautschukzusammensetzung nach Anspruch 1,
wobei die Kautschukzusammensetzung zur Verwendung in einem Reifenbestandteil ist.

8. Kautschukzusammensetzung nach Anspruch 7,
wobei der Kautschukbestandteil eine Seitenwand, eine Grundlauffläche, ein Bindegummi, ein Wulstkernreiter, ein Streifenkernreiter, eine Wulstspitze oder eine Flanke ist.

9. Pneumatischer Reifen, der aus der Kautschukzusammensetzung nach Anspruch 1 gebildet ist.

**Revendications**

1. Composition de caoutchouc comprenant un mélange monté qui comprend :

un caoutchouc naturel modifié avec une teneur en phosphore de 200 ppm ou moins ; et
des fibres végétales microfibrillées.

2. Composition de caoutchouc selon la revendication 1,
dans laquelle la composition de caoutchouc a un rapport (E*a/E*b) d'un module complexe E*a dans un sens d'extrusion sur un module complexe E*b dans un sens perpendiculaire au sens d'extrusion, tous les deux mesurés à une température de 70°C et une amplitude de déformation dynamique de 2% sous un allongement initial de 10%, de 1,05 à 6,00, dans laquelle le module complexe E*a est 7 à 100 MPa.

3. Composition de caoutchouc selon la revendication 1,
dans laquelle le mélange monté comprend 5 à 30 parties en masse des fibres végétales microfibrillées pour 100 parties en masse du caoutchouc naturel modifié.

**4.** Composition de caoutchouc selon la revendication 1,
dans laquelle la composition de caoutchouc comprend au moins un parmi
un noir de carbone avec une surface spécifique d'adsorption d'azote de 25 à 200 $m^2/g$ et
une silice avec une surface spécifique d'adsorption d'azote de 70 à 300 $m^2/g$, et
la composition de caoutchouc a une teneur totale du noir de carbone et de la silice de 25 à 80 parties en masse pour 100 parties en masse du composant caoutchouc total.

**5.** Composition de caoutchouc selon la revendication 1,
dans laquelle la composition de caoutchouc comprend au moins une résine réticulable choisie parmi le groupe consistant en des résines résorcinoliques, des résines résorcinoliques modifiées, des résines crésoliques, des résines crésoliques modifiées, des résines phénoliques et des résines phénoliques modifiées, et
la composition de caoutchouc a une teneur totale des résines réticulables de 1 à 20 parties en masse pour 100 parties en masse du composant caoutchouc total.

**6.** Composition de caoutchouc selon la revendication 1,
dans laquelle la composition de caoutchouc comprend un condensé d'alkylphénol-chlorure de soufre représenté par la formule (1) suivante :

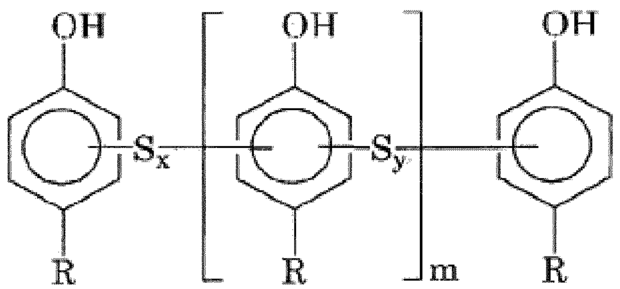

(1)

dans laquelle les R sont identiques ou différents les uns des autres et chacun représente un groupe alkyle en $C_5$-$C_{15}$ ou un groupe amyle ; x et y sont identiques ou différents l'un de l'autre et chacun représente un entier de 1 à 4 ; et m représente un entier de 0 à 300, et
la composition de caoutchouc a une teneur du condensé d'alkylphénol-chlorure de soufre de 0,2 à 10 parties en masse pour 100 parties en masse du composant caoutchouc total.

**7.** Composition de caoutchouc selon la revendication 1,
dans laquelle la composition de caoutchouc est destinée à une utilisation dans un composant de pneumatique.

**8.** Composition de caoutchouc selon la revendication 7,
dans laquelle le composant de pneumatique est un flanc, une sculpture, une gomme de liaison, un sommet de talon, un sommet de bandelette talon, un sommet de coussin de jante, ou une aile.

**9.** Pneumatique, formé à partir de la composition de caoutchouc selon la revendication 1.

Fig. 1

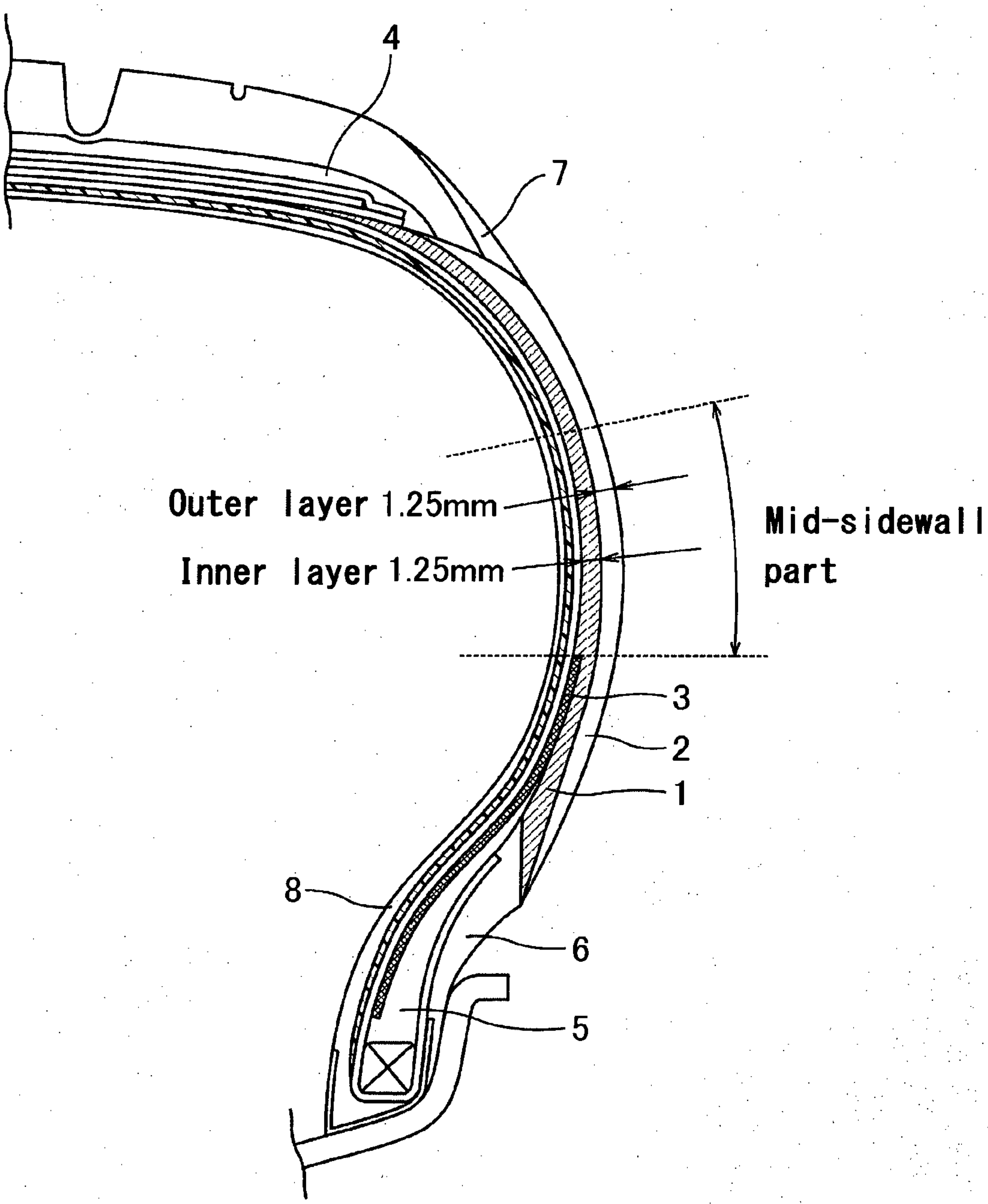
4
7
Outer layer 1.25mm
Inner layer 1.25mm
Mid-sidewall part
3
2
1
8
6
5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4581116 B
- JP 2009202865 A
- JP 2007106166 A